# Europäisches Patentamt

# European Patent Office

# Office européen des brevets

(19)

(11) Veröffentlichungsnummer : **0 014 448**
**B1**

(12) **EUROPÄISCHE PATENTSCHRIFT**

(45) Veröffentlichungstag der Patentschrift :
19.05.82

(21) Anmeldenummer : 80100524.0

(22) Anmeldetag : 02.02.80

(51) Int. Cl.³ : **D 21 F   1/70, D 21 C   5/02**

(54) Verfahren und Vorrichtung zum Deinken von Faserstoffsuspensionen.

(30) Priorität : 05.02.79 DE 2904326

(43) Veröffentlichungstag der Anmeldung :
20.08.80 (Patentblatt 80/17)

(45) Bekanntmachung des Hinweises auf die Patenterteilung : 19.05.82 Patentblatt 82/20

(84) Benannte Vertragsstaaten :
AT CH FR GB NL SE

(56) Entgegenhaltungen :
DE - B - 2 610 581
DE - B - 2 656 477
FR - A - 793 990
FR - A - 1 140 002
US - A - 3 012 671
US - A - 3 769 207
US - A - 4 157 952

(73) Patentinhaber : N.V. Papierfabriek Gennep
60, Willem Boyeweg
Gennep (NL)

(72) Erfinder : Heijs, Karel Augustinus G., Ing.
Stationsweg 4
Gennep (NL)
Erfinder : de Jong, Robert Lucas
v. Elswijkstraat 15
Boxmeer (NL)
Erfinder : Dechamps, Antonius Johannes
Dr. Poelstraat 27
Gennep (NL)

(74) Vertreter : Uhlmann, Hans, Dr. rer.nat., Dipl.-Chem.
Gladbacher Strasse 189
D-4060 Viersen 1 (DE)

Imprimerie Jouve, 18, rue St-Denis, 75001 Paris, France

# 0 014 448

Verfahren und Vorrichtung zum Deinken von Faserstoffsuspensionen

Die Erfindung betrifft ein Verfahren und eine Vorrichtung zum Deinken von Faserstoffsuspensionen durch Flotation, bei dem die Faserstoffsuspension nach der Behandlung mit Chemikalien durch Luftzufuhr in den Bodenbereich eines Behälters flotiert und von aufgeschwemmten Verunreinigungen wie Druckfarben, Bindemitteln und Pigmenten gereinigt wird. Die Vorrichtung besteht dabei aus einem Behälter, dessen Bodenbereich zumindest teilweise mit luftgespeisten Belüftungsaggregaten versehen und im Bereich des Flüssigkeitsspiegels der Faserstoffsuspension mit Mitteln zum Abführen der Verunreinigungen ausgerüstet ist.

Flotiervorrichtungen dieser Art werden zum Deinken, also zur Entfernung von Druckfarbe und Asche aus Altpapier eingesetzt und sind beispielsweise aus der DE-A 21 61 015 bekannt. Dabei durchströmt Luft die Bodenöffnungen, wobei sich an die Luftblasen die Druckfarbe usw. anlagert und als Schaum auf der Faserstoffsuspension aus Altpapier schwimmt. Dieser Schaum wird gemäß der DE-A 21 61 015 abgepaddelt. Eine weitere bekannte Vorrichtung gemäß der DE-B 24 09 235, die einen analogen Aufbau vorsieht, treibt durch unterhalb des Flüssigkeitsspiegels angeordnete Sprührohre den Schaum in Tröge.

Bei den bekannten Vorrichtungen ist der Nachteil gemeinsam, daß entweder der Schaum nicht vollständig von der Oberfläche der Faserstoffsuspension entfernt wird, oder daß mit dem Schaum ein meist erheblicher Anteil der Faserstoffsuspension durch die Schraumtröge abgesaugt, bzw. mittels der Paddel abgepaddelt wird. Die Faserstoffsuspension enthält neben viel Feinstoff noch einen erheblichen Anteil an Faserbruchteilen, die für den Verarbeitungsprozeß verwertbar sind, jedoch eine höhere Verunreinigung aufweisen als die restlichen, in der Faserstoffsuspension und damit in der Flotiervorrichtung verbliebenen Fasern. Wird der Feinstoffanteil nicht entfernt, so ergibt sich für die gesamte Faserstoffsuspension eine erhebliche Einbuße an Weiße und damit an Qualität.

Der vorliegenden Erfindung liegt die Aufgabe zugrunde, eine Faserstoffsuspension so zu reinigen, daß eine hohe Weiße und damit ein hoher Reinigungsgrad gewährleistet ist, ohne daß große Faserstoffsuspensionsmengen ausgeschieden oder im Kreis geführt werden müssen, wobei gleichzeitig die Erfassung des Feinstoffs gewährleistet werden soll.

Diese Aufgabe wird gelöst durch ein Verfahren zum Deinken von Faserstoffsuspensionen durch Flotation, bei dem die Faserstoffsuspension nach der Behandlung mit Chemikalien durch Luftzufuhr flotiert und von aufgeschwemmten Verunreinigungen wie Druckfarben, Bindemitteln und Pigmenten gereinigt wird, mit dem kennzeichnenden Merkmal, daß der bei der Flotation entstehende Schaum dicht oberhalb des Flüssigkeitsspiegels abgesaugt und niedergeschlagen und die obere Schicht der Faserstoffsuspension vom Schaum und der übrigen Faserstoffsuspension getrennt und abgeleitet wird.

Das Verfahren wird vorteilhaft mit einer Vorrichtung durchgeführt, die aus einem Behälter besteht, dessen Bodenbereich zumindest teilweise mit luftgespeisten Belüftungsaggregaten versehen und im Bereich des Flüssigkeitsspiegels der Faserstoffsuspension mit Mitteln zum Abführen der Verunreinigungen ausgerüstet ist, wobei sie durch mindestens ein sich im wesentlichen quer über die gesamte Breite des Behälters dicht oberhalb des Flüssigkeitsspiegels erstreckendes Abzugselement zur Abführung des mit Verunreinigungen beladenen Schaumes und mindestens ein dicht unterhalb des Flüssigkeitsspiegels sich im wesentlichen quer über die gesamte Breite des Behälters erstreckende Ablaufrinne zur Abführung der Feinstoffe aus dem an den Flüssigkeitsspiegel angrenzenden Bereich der Faserstoffsuspension gekennzeichnet ist.

Durch das Anordnen von Abzugselementen dicht oberhalb des Flüssigkeitsspiegels ist gewährleistet, daß lediglich Schaum abgesaugt wird und keine Flüssigkeit, die die Feinstoffe enthält. Der gesamte abgesaugte Schaum wird niedergeschlagen, d.h., in seine Bestandteile Farbstoffe und Wasser zerlegt, ohne daß große Wassermengen, wie sonst beim üblichen Schaumablöschen, anfallen. Bei den bisher bekannten Aggregaten werden Schaum und Feinstoffe zunächst von der Oberfläche abgepaddelt oder in Rinnen abgespritzt und dadurch vernichtet. In beiden Fällen ergibt sich aber eine erhebliche Verdünnung. Desweiteren werden größere Mengen Feinstoff mitgerissen, d.h. Verunreinigungen, Bindemittel und Faserbruchstücke und Fasern, wobei, um die letzteren zurückzugewinnen, dieser gesamte, stark verunreingte Rejektstrom erneut flotiert werden muß.

Demgegenüber werden gemäß der Erfindung durch Anordnung von Ablaufrinnen dicht unterhalb des Flüssigkeitsspiegels die flotierten Feinstoffe und Faserbruchstücke getrennt vom Schaum erfaßt, die zwar noch einen größeren Verschmutzungsgrad aufweisen, jedoch nicht mehr die an den Schaum gebundenen Farbstoffe und Verunreinigungen. Bei dem nach dem erfindungsgemäßen Verfahren anfallenden Rejektstrom handelt es sich also um ein wesentlich sauberes Material, das bereits weitgehend von Farbstoffen befreit ist und außerdem, da der Schaum nicht abgelöscht wurde und sich nicht in diesem Rejektstrom befindet, um einen Rejektstrom geringen Volumens.

Gemäß einer vorteilhaften Ausgestaltung der Erfindung sind die Abzugselemente gelochte oder geschlitzte Rohre, die unter einem Vakuum von 0,5-2 m WS stehen. Die Rohre sind dabei in einem Abstand von vorzugsweise 10-50 mm über dem Flüssigkeitsspiegel angeordnet, wobei durch den gewählten Vakuumbereich gewährleistet ist, daß keine Flüssigkeit, aber aller anfallende Schaum abgesaugt wird. Die Verwendung gelochter Rohre ist deshalb vorteilhaft, weil diese Rohre als solche sehr preisgünstig im Handel erhältlich sind und das Vakuum durch Eingringen unterschiedlicher Lochgrößen

2

und Lochformen über die gesamte Rohrlänge gleichmäßig aufrechterhalten werden kann. Desweiteren weisen Rohrkonstruktionen eine erhebliche Stabilität auf, so daß die Abzugselemente ohne zusätzliche Unterstützung direkt mit Halterungen, z.B. an eine Flotationswanne angebracht werden können. Die Anbringung geschieht dabei zweckmäßig so, daß eine Verstellung der Höhe, also des Abstandes des gelochten Rohres vom Flüssigkeitsspiegel der Faserstoffsuspension möglich ist. Die Höhenverstellung dient der Anpassung an den jeweils anfallenden Schaum, der sich sowohl nach der zugegebenen Art und Menge der Reinigungschemikalien als auch nach der Luftzudosierung richtet. Außerdem ist der Schaumanfall natürlich noch abhängig vom eingesetzten Rohmaterial der Faserstoffsuspension, also im allgemeinen von der Zusammensetzung des zu reinigenden Altpapiers.

Eine bevorzugte Ausgestaltung der Erfindung sieht vor, daß die Ablaufrinnen als Profilrohr ausgebildet sind, die an ihrer Oberseite mit über ihre Länge verteilt angeordneten Öffnungen zur Abführung der Feinstoffe versehen sind. Unter dem Begriff Profilrohr ist dabei ein Holkörper zu verstehen, dessen Querschnitt eine, wenn auch nur entfernte Ähnlichkeit mit dem L-Profil aufweist und bei dem der kürzere Schenkel parallel oder leicht geneigt zum Flüssigkeitsspiegel angeordnet ist und auf seiner Oberfläche die erwähnten Öffnungen zur Abfuhr des Feinstoffes aufweist. Der kurze Schenkel ist dabei völlig in die Faserstoffsuspension eingetaucht und gegen deren Strömungsrichtung gerichtet. Der längere Schenkel ragt über den Flüssigkeitsspiegel und über die darauf befindliche Schaumschicht hinaus und bildet damit eine Art Stauplatte. Die mit Luft belandenen Feinstoffe und Faserbruchstücke gelangen nicht völlig bis zur Oberfläche, also bis an den Flüssigkeitsspiegel, sondern bilden eine Schicht, die unterhalb des Flüssigkeitsspiegels treibt und durch die Öffnungen in das Innere des Profilrohres gelangt. Gleichzeitig wird dadurch sichergestellt daß evtl. oberhalb der Öffnungen befindlicher Schaum bis zur völligen Absaugung gestaut wird und sich ggf. absetzende Partikel nicht zurück in die Faserstoffsuspension gelangen, sondern durch die Öffnungen im Profilrohr abgeführt werden. Vorzugsweise weisen die Ablaufrinnen einen hakenförmigen Querschnitt auf und die Öffnungen sind im tiefsten Teil des Hakens angeordnet. Durch den hakenförmigen Querschnitt wird die eintretende Faserstoffsuspension, die über den Rand des Hakens läuft, sofort den tiefsten Stellen und damit den Ablaufbohrungen zugeführt, durch deren Größe die abzuführende Flüssigkeitsmenge bestimmt wird. Die Hakenform gewährleistet weiter, daß zerfallender Schaum nicht in die bereits gereinigte Faserstoffsuspension zurücklaufen kann, sondern im Bereich des Hakens aufgefangen und damit durch die Ausflußöffnungen abtransportiert wird. Gleichzeitig dient ein Teil des Hakens, das der Flüssigkeitsspiegel überragt, als Stauplatte für den Schaum, so daß mit Sicherheit ein Verschleppen von Schaumpartikel hinter die Absaugung vermieden wird. Ein weiterer Vorteil der hakenförmigen Ausführung der Ablaufrinnen ist darin zu sehen, daß durch die gerundeten Flächen der Strömungswiderstand nur geringfügig geändert wird, d.h. die gesäuberte Faserstoffsuspension unter der Ablaufrinne her sich weiterbewegen kann, während von der Oberfläche luftbeladene Feinstoffe und Faserbruchstücke abgezogen werden.

Gemäß einer zweckmäßigen Ausgestaltung der Erfindung sind die Öffnungen Bohrungen, deren Entfernung voneinander zum Randbereich des Behälters hin abnimmt. Die Strömung der Faserstoffsuspension im Behälter wird bekanntlich immer an den Wandungen gebremst, wodurch sich in diesen Bereichen leicht Schmutzrückstände vom Schaum und dem oberen Bereich der Faserstoffsuspension absetzen können. Durch dichtere Anordnung von Bohrungen im Randbereich der Ablaufrinnen wird die Geschwindigkeit der Strömung in diesen Bereichen beschleunigt und im wesentlichen auf die gleiche Geschwindkgkeit gebracht, die die Faserstoffsuspension in der Mitte des Deinkingbehälters, also beispielsweise an der Deinkingwanne aufweist, wodurch kein Ansetzen von Schmutzpartikeln an die Wände des Behälters stattfindet.

Durch die Anzahl und die Größe der Bohrungen, die sich in der Ablaufrinne befinden, wird die Menge vorgegeben, die von der Oberfläche der Faserstoffsuspension abgezogen werden soll. Von ganz wesentlicher Bedeutung ist in diesem Zusammenhang, daß das Ablaufen dieser genau vorgegebenen Menge ohne Behinderung erfolgt, weil sonst nicht gewährleistet ist, daß stets eine konstante Menge abgezogen wird. Eine besonders bevorzugte Ausgestaltung der Erfindung sieht deshalb vor, daß die Ablaufrinne eine freie Ablauföffnung aufweist, deren Querschnittsfläche größer als die Summe der Querschnittsfläche der Öffnungen ist.

Gemäß einer zweckmäßigen Ausgestaltung der Erfindung ist das Abzugselement, bzw. die Abzugselemente in einer Höhe von 10 bis 50 mm über dem Flüssigkeitsspiegel angeordnet. Dieser Abstand ist gemäß einer bevorzugten Ausgestaltung einstellbar. Er richtet sich nach Art und Menge der eingesetzten Chemikalien, sowie nach dem Aufbau des für die Faserstoffsuspension eingesetzten Rohstoffes, d.h. Altpapieres.

Die Ablaufrinne als solche muß in ihrer Höhe zum Flüssigkeitsspiegel nicht verstellt werden. Dadurch, daß bei Flotationswannen jedoch eine erhebliche Strecke von der Faserstoffsuspension zurückgelegt werden muß, ergibt sich auf Grund der Reibung zwangsläufig ein Abfall des Flüssigkeitsniveaus, d.h. daß der Flüssigkeitsspiegel am Eintrittsbereich in eine Flotationswanne höher ist als am Austrittsbereich. Eine besonders bevorzugte Ausgestaltung der Erfindung sieht deshalb vor, daß die Ablaufrinne mit dem Abzugselement zu einem in seiner Höhe zum Flüssigkeitsspiegel einstellbaren Verbundaggregat zumsammengefaßt ist. Auf diese Art und Weise kann in sehr einfacher Form die Ablaufrinne in ihrer Höhe zum jeweiligen Flüssigkeitsspiegel eingestellt werden. Gleichzeitig ergibt sich dabei, daß das Abzugselement die einmal gewählte Distanz zwischen Flüssigkeitsspiegel und geschlitztem oder gelochtem Rohr beibehält.

Gemäß einer weiteren bevorzugten Ausgestaltung der Erfindung sind das bzw. die Abzugselemente mit einer Stauplatte innerhalb des Verbundaggregates verbunden. Die Stauplatte ist dabei zweckmäßig Teil der Ablaufrinne, die als Profilrohr ausgeführt ist und sowohl ein offenes als auch ein geschlossenes Profil darstellen kann. Wenn damit zur rechnen ist, daß ein erheblicher Schaumanfall vorliegen könnte, empfiehlt sich aus Sicherheitsgründen die Wahl eines offenen Profils für die Ablaufrinne, so daß bei eventuellem Übersteigen des Schaumes über die Stauplatte dieser Schaum vom Inneren der Ablaufrinne aufgenomen und abgeführt wird. Dadurch wird mit Sicherheit vermieden, daß der stark verunreinigte Schaum der bereits gereinigten Faserstoffsuspension wieder zugeführt wird. Es ist jedoch davon auszugehen, daß im Normalfall durch Regulierung der Saugleistung der Schaum direkt abgeführt werden kann, so daß die offene Ablaufrinne nur eine zusätzliche Sicherheitsmaßnahme für die Zeit des Anlaufs bzw. der Inbetriebnahme der Deinkingwanne oder analoger Aggregate darstellt.

Bei praktisch allen Deinkingverfahren wird mit Chemikalien gearbeitet, wobei die Chemikalien die größte Wirksamkeit bei erhöhter Temperatur der Faserstoffsuspension aufweisen. Die Faserstoffsuspension muß also aufgeheizt werden, wobei sich als zweckmäßigster Bereich eine Temperatur von ca. $40\,°C \pm 10°$ ergeben hat. Durch das bisher übliche Flotieren mit von außen zugeführter Luft oder unter Zuhilfenahme von im Gebäude befindlicher Luft, also Raumluft, erfolgt eine Abkühlung der Faserstoffsuspension, die unerwünscht ist. Gleichzeitig tritt mit jedem Flotiervorgang eine erhebliche Menge Feuchtigkeit in die Umgebung des Flotationsgerätes aus, da die Luft feuchtigkeitsgesättigt die Deinkingvorrichtung verläßt. Eine sehr vorteilhafte Ausgestaltung der Erfindung sieht deshalb vor, daß die beim Absaugen des Schaumes anfallende Luft als Blasluft zur Flotierung eingesetzt wird. Damit wird die Luft im Kreislauf geführt, d.h. daß nur eine unwesentliche Abkühlung der Luft erfolgt und damit auch die Faserstoffsuspension nur unwesentlich abgekühlt wird. Der weitere immense Vorteil besteht darin, daß jetzt durch die Schaumabsaugung oberhalb der Faserstoffsuspension im Bereich des Flüssigkeitsspiegels neben dem Schaum exakt die Luftmenge abgesaugt wird, die den größten Feuchtigkeitsgehalt aufweist. Dadurch ist der Raum, in dem sich die Deinkinganlage befindet, wesentlich weniger von Feuchtigkeit beaufschlagt, d.h. in weit geringerem Maße der Korrosion ausgesetzt.

Eine zweckmäßige Ausgestaltung der Erfindung sieht vor, daß der abgesaugte Schaum zentrifugiert und dadurch eingedickt wird. Der in die Zentrifuge geleitete Schaum wird zunächst durch die Zentrifugalkraft niedergeschlagen, d.h. er bricht zusammen und es entsteht aus Schaum und diesen angelagerten Schmutzpartikeln eine Trübe. Diese Trübe wird in der Zentrifuge getrennt in Wasser und Feststoff. Dadurch ergibt sich eine erhebliche Eindickung. Es muß somit nur verhältnismäßig wenig Abfall abgeführt werden.

Der durch die Ablaufrinnen abgeleitete Feinstoff enthält noch eine größere Menge Faserbruchteile, die noch verwertbar sind, Durch die bereits erfolgte Trennung des Schaumes von diesem als Rejektstrom bezeichneten Material ergibt sich, daß das Rejektmaterial bereits sehr weitgehend gereinigt ist. In vielen Fällen kann man daher auf eine separate Aufbereitung dieses Rejektmaterials verzichten und es direkt wieder der Deinkinganalage zuführen, ohne daß dadurch eine Verschlechterung der Weiße in der gesamten Faserstoffsuspension erfolgt.

Das Deinkingverfahren und auch die Deinkingvorrichtung läßt sich besonders gut an hand einer Flotationswanne beschreiben. Die nachfolgende Tabelle zeigt deshalb den Vergleich der erreichbaren Weißewerte zwischen einer konventionellen Deinkingwanne und einer Deinkingwanne, die mit den Vorrichtungen gemäß der Erfindung ausgerüstet ist.

Flotationswanne

| | Stand d. Technik | | | gemäß Erfindung | | | |
|---|---|---|---|---|---|---|---|
| | Rohmaterial = Zulauf | Rejekt I = Schaum + Oberschicht abgepaddelt | Gutsstoff I | Zulauf | Rejekt II | Schaum | Gutstoff II |
| Durchsatz m³/h | 310 | 34 | 276 | 310 | 29 | 5,4 | 276 |
| Konsistenz % | 0,78 | 0,94 | 0,76 | 0,78 | 0,68 | 2,38 | 0,76 |
| Feststoffgehalt | 2 418 | 320 | 2 098 | 2 418 | 197 | 129 | 2 092 |
| Asche % | 14,8 | 36,8 | 11,6 | 14,8 | 19,1 | 52,5 | 11,6 |
| Asche kg/h | · 358 | 115 | 243 | 358 | 38 | 68 | 243 |
| Weiße GE | 71,3 | 63,8 | 71,9 | 71,3 | 70,1 | 52,8 | 74,9 |

Bei Flotationswannen gemäß dem Stand der Technik wird Schaum zusammen mit Flüssigkeit abgeführt. Erfindungsgemäß erfolgt die Abfuhr von Schaum und Flüssigkeit separat. Wie die Tabelle zeigt, ergibt sich eine Reflektionsverbesserung von 71,9 auf 74,9 Grad GE. Diese erhebliche Verbesserung ist darauf zurückzuführen, daß die Farbstoffe nicht länger im Kreislauf geführt, sondern durch den Schaum direkt abgeschieden werden. Die separate Schaumabfuhr hat als weitere Vorteile, daß nur niedrige Volumen gehandhabt werden müssen, d.h. der Zentrifuge werden 5,4 m³/h zugeführt, statt der früher erforderlichen Zufuhr von 34 m³/h. Die abgeführte Menge nach dem Stand der Technik, also die 34 m³/h, war so groß, daß eine separate Flotationszelle nachgeschaltet werden mußte, um den immer noch in diesem Material vorhandenen Faserstoff weiter aufzuarbeiten. Im separat abgesaugten Schaum befindet sich praktisch kein Faserstoff, so daß nach der Abscheidung des Wassers aus dem Schaum der verbleibende Schmutz direkt vernichtet werden kann. Ein weiterer Vorteil ergibt sich daraus, daß der Schaum eine hohe Feststoffkonzentration, nämlich 2,38 %, entsprechend 129 kg/h aufweist, wohingegen früher bei der gemischten Abfuhr von Schaum und Flüssigkeit nur eine Konzentration von 0,94 erreicht werden konnte, was 320 kg/h Feststoffgehalt entspricht, woraus sich gleichzeitig ergibt, daß hier zu viel gute Fasern mitabgeführt wurden.

Als Weiteres läßt sich aus der Tabelle herauslesen, daß der Schaum jetzt 52,5 % Asche transportiert und diese direkt entfernt wird. Asche muß in jedem Fall aus der Faserstoffsuspension entfernt werden, weil diese Träger der Farbstoffpartikel ist, d.h. direkt die Weiße beeinflußt. Dem Aschegehalt von 52,5 % steht der Aschegehalt der früher üblichen Schaumflüssigkeitsmischung mit 36,8 % gegenüber. Diese 36,8 % entsprechen 115 kg/h, die früher separat aufgearbeitet werden mußten. Der heute abgeführte Schaum enthält jedoch bereits 68 kg/h an Asche, d.h. 60 % der Asche, die früher als Gemisch von Schaum und Flüssigkeit abgeführt wurden, werden heute allein durch den Schaum abgeführt und sofort aus dem Kreislauf ausgeschieden. Deutlich sichtbar wird das an der niedrigen Reflektion von 52,8 % gegenüber 63,8 %, die Testblätter aus dem Gemisch Schaum und Flüssigkeit aufweisen. Bemerkenswert ist weiter, daß mit dem Schaum nur wenig Fasern verloren gehen. Das folgt aus der Schaummasse. Bei einem stündlichen Abzug von 129 kg Schaum enthält dieser Schaum 68 kg Asche. Als Differenzmenge bleiben 61 kg Faserteilchen übrig, was, bezogen auf die ursprüngliche Gewichtsmenge von 2 418 kg/h einen Verlust von 2,5 % ergibt. Die analoge Rechnung für den Stand der Technik ergibt einen Verlust von 8,5 %.

Die Erfindung wird nachstehend an Hand der Zeichnungen beschrieben :

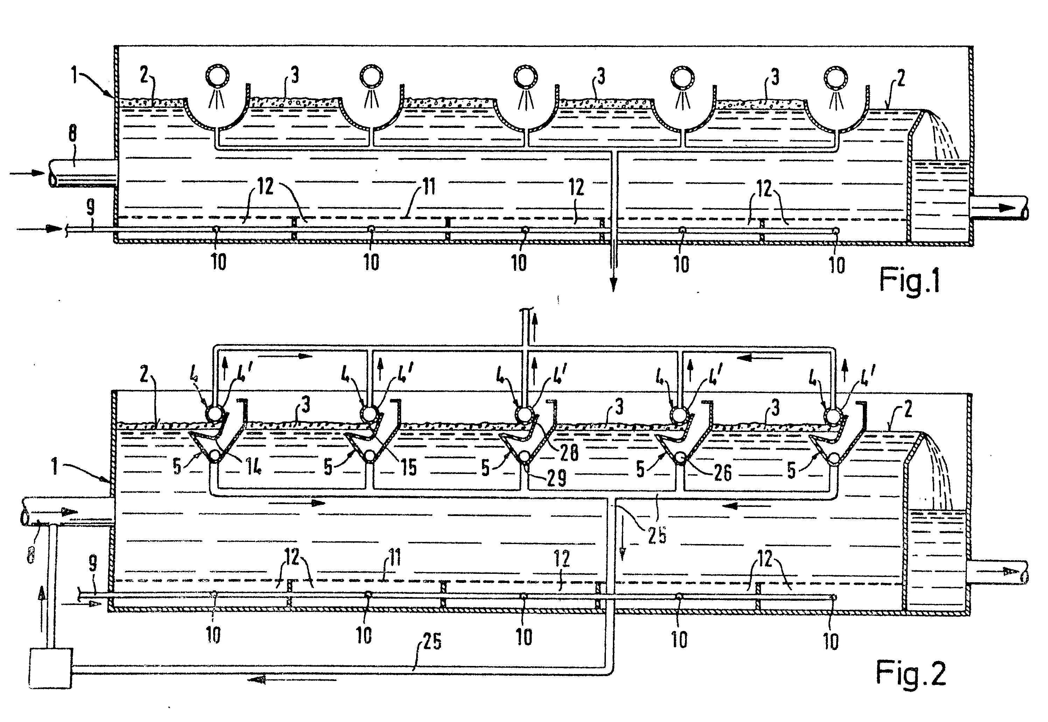

Figur 1   zeigt als Prinzipskizze eine bisher übliche Flotationswanne,

Figur 2   eine Flotationswanne mit Einbauten gemäß der Erfindung

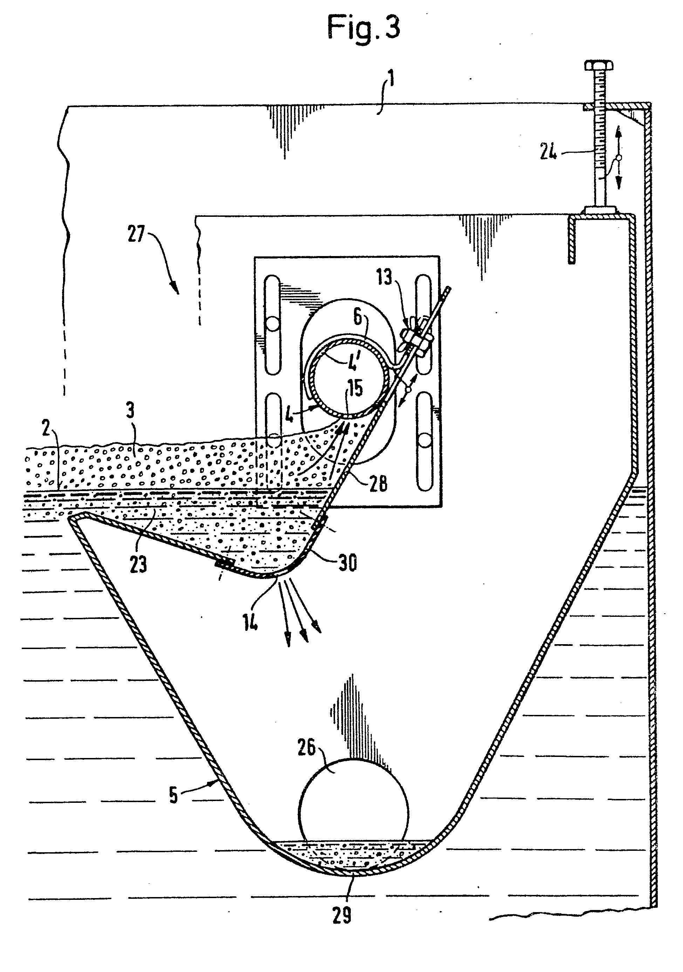

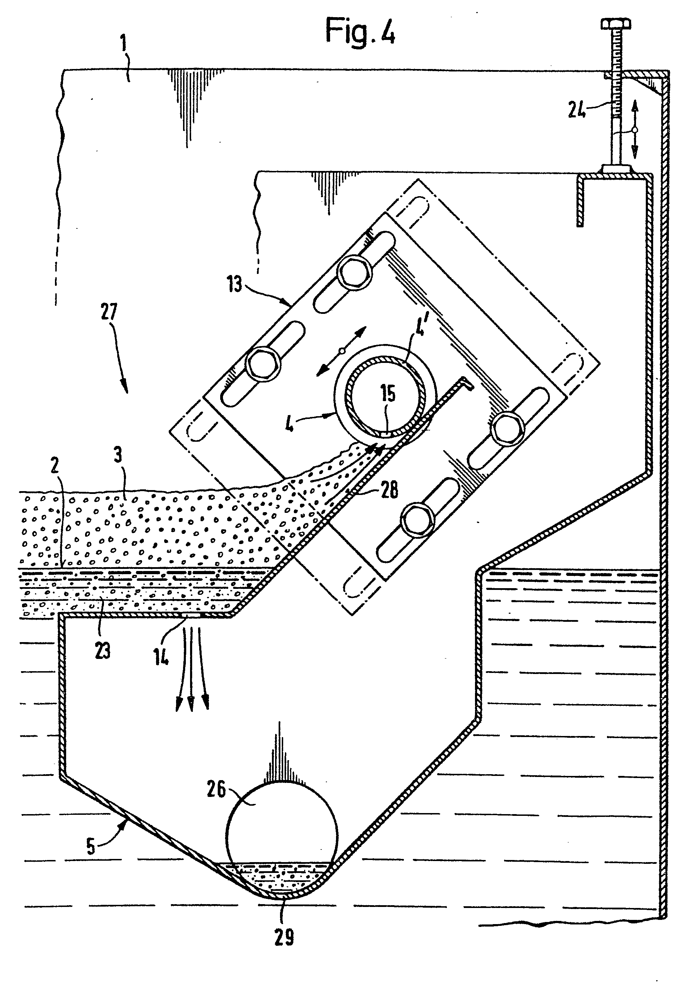

Figure 3 und 4   Ausführungsformen des Verbundaggregates,

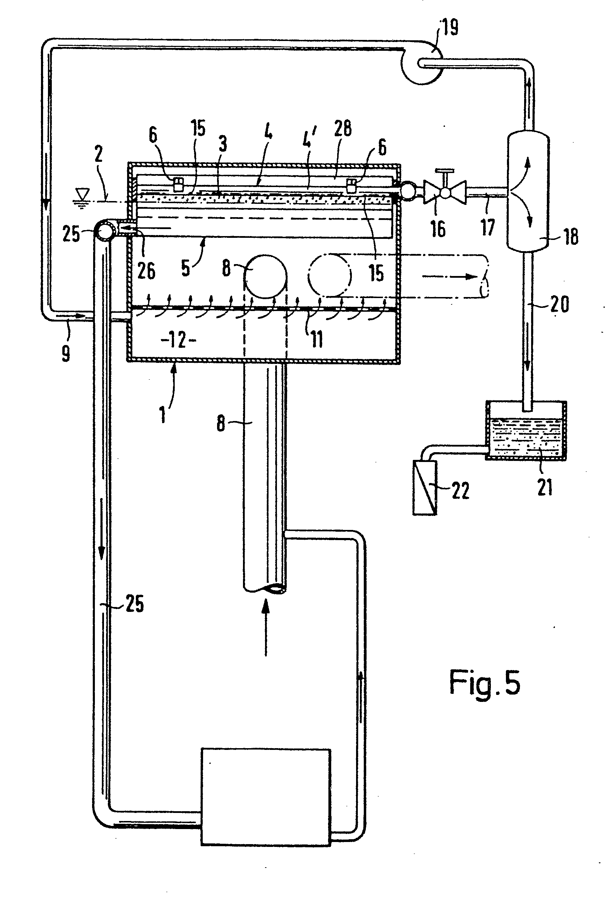

Figur 5   das Kreislaufschema einer Deinkinganlage.

Die aufbereitete und mit Chemikalien versetzte Faserstoffsuspension wird der Flotationswanne 1 über den Einlaßstutzen 8 zugeleitet. Die Druckleitung 9 führt über den Verteilerstutzen 10 dem Siebboden 11, der die Luftkammern 12 abdeckt, die für das Aufschäumen der Faserstoffsuspension erforderliche Luftmenge zu. Die durch die Faserstoffsuspension aufsteigende Luft bildet feine Blasen, an deren Umfang sich Farbstoffe und Pigmente anlargern, wobei die größeren Blasen sich über den Flüssigkeitsspiegel 2 erheben und eine Schicht aus Schaum 3 bilden. Diese Schicht aus Schaum 3 enthält die dunkelsten Verunreinigungen und einen großen Teil der Pigmente der Faserstoffsuspension. Sie wird durch Abzugselemente 4, die als gelochte Rohre 4′ ausgeführt sind, vom Flüssigkeitsspiegel 2 abgesaugt. Die Abzugselemente 4 sind durch Stellvorrichtungen 13 in ihrer Höhe zum Flüssigkeitsspiegel 2 verstellbar und können durch Drehen des gelochten Rohres 4′ mit ihren Bohrungen 15 in die gewünschte Richtung, d.h. unter verschiedenen Winkeln zum Flüssigkeitsspiegel 2 eingestellt werden.

Aus den Abzugselementen 4 gelangt der Schaum 3 nach Passieren eines Ventiles 16 in die Sammelleitung 17, an der alle Abzugselemente 4 einer Flotationswanne 1 angeschlossen sind und die die Verbindung zwischen der Flotationswanne 1 und einem Abscheider 18 darstellt. Dieser Abscheider 18 dient der Niederschlagung des Schaumes und kann als Zentrifuge ausgebildet sein. Der Abscheider 18 ist mit einer Vakuumpumpe 19 verbunden, die für das erforderliche Vakuum in den Abzugselementen 4 sorgt und gleichzeitig die aus diesen Abzugselementen 4 abgesaugte Luft der Flotationswanne 1 als Druckluft wieder zuführt. Es ergibt sich dadurch ein Kreislauf, der äußerst wirtschaftlich ist und Feuchtigkeitseinwirkungen infolge Verdampfens am Aufstellungsort der Flotationswanne auf ein Mindestmaß reduziert.

An den Abscheider 18 ist ein Fallrohr 20 angeschlossen, durch das der als Schmutzwasser niedergeschlagene Schaum 3 in das Becken 21 geleitet wird. Von diesem Becken 21 gelangt das Schmutzwasser zu einer weiteren Zentrifuge 22, die die Verunreinigungen abscheidet. Das so vorgereinigte Wasser wird der Wasseraufbereitung zugeführt, die abgeschiedenen Verunreinigungen deponiert.

Bei der Flotation der Faserstoffsuspension bilden sich bekanntlich unterschiedlich große Luftbläschen. Ein Teil dieser Luftbläschen, an die sich Faserbruchstücke angelagert haben und die auch viel Feinstoffe enthalten, steigt nicht als Schaum über den Flüssigkeitsspiegel 2, sondern bildet dicht unter ihm eine Feinstoffschicht 23, die stark mit feinsten Luftblasen durchsetzt ist. Sie treibt dicht unter dem Flüssigkeitsspiegel 2 und wird durch die Bewegung der Faserstoffsuspension in die Ablaufrinnen 5 geleitet. Die Ablaufrinnen 5 haben einen hakenförmigen Querschnitt und weisen im tiefsten Bereich der inneren Hakenfläche Öffnungen 14 auf. Die Größe dieser Öffnungen bestimmt in Verbindung mit der Eintauchtiefe der Ablaufrinne 5 den Durchfluß und damit die Menge an Faserstoffsuspension, die als Feinstoffschicht 23 abgeleitet wird. Das durchgetretene Material — Rejekt — fließt auf den Rinnenboden 29 und gelangt durch die Ablauföffnung 26 in die Rückführleitung 25, von wo es dem Einlaßstutzen 8 zugeführt wird.

Mittels einer Senk- und Hubvorrichtung 24 kann das aus Abzugelement 4 und Ablaufrinne 5 bestehende Verbundaggregat 27 dem unterschiedlichen Niveau in der Flotationswanne 1 angepaßt werden. Diese Anpassung ist im Normalfall nur einmal erforderlich und muß nur dann neu erfolgen, wenn die Durchsatzmenge geändert wird.

Das gelochte Rohr 4′ ist mit einer Schelle 6 an der Stauplatte 28 befestigt, die über eine Gummischürze 30 mit der Ablaufrinne verbunden ist. Die Gummischürze 30 weist Öffnungen 14 auf, die einen Durchmesser von 15 mm besitzen. Über die gesamte Länge der Ablaufrinne 5 sind 10 solcher Löcher angeordnet, wobei der geringste Lochabstand zur Seitenwand der Flotationswanne 1 50 mm beträgt. Von diesen 10 Löchern 14 sind jedoch fünf, also jedes zweite, mit einem Blindstopfen versehen, so daß nur fünf Löcher zur Abfuhr des feinstoffdurchsetzten, oberen Bereiches der Faserstoffsuspension dienen. Durch Öffnen oder Verschließen weiterer Löcher ist es möglich, die abzuführende Menge der Feinstoffschicht 23 zu regulieren, d.h. dem eingesetzten Altpapierrohstoff anzupassen. Durch diese Regulierung, d.h. durch erhöhte bzw. erniedrigte Abfuhr ändert sich selbstverständlich — bei gleichem Zulauf von Faserstoffsuspension — das Niveau der Faserstoffsuspension im Behälter, so daß die Verbundaggregate 27 über die Senk- und Hubvorrichtung 24 neu eingestellt werden müssen.

## Ansprüche

1. Verfahren zum Deinken von Faserstoffsuspensionen durch Flotation, bei dem die Faserstoffsuspensionen nach der Behandlung mit Chemikalien durch Luftzufuhr flotiert und von aufgeschwemmten Verunreinigungen wie Druckfarbe, Bindemitteln und Pigmenten gereinigt wird, dadurch gekennzeichnet, daß der bei der Flotation entstehende Schaum dicht oberhalb des Flüssigkeitsspiegels abgesaugt und niedergeschlagen und die obere Schicht der Faserstoffsuspension vom Schaum und der übrigen Faserstoffsuspension getrennt und abgeleitet wird.

2. Verfahren zum Deinken von Faserstoffsuspensionen nach Anspruch 1, dadurch gekennzeichnet, daß die beim Absaugen des Schaumes anfallende Luft als Blasluft zur Flotierung eingesetzt wird.

3. Verfahren nach Anspruch 1 und 2, dadurch gekennzeichnet, daß der abgesaugte Schaum zentrifugiert und dadurch eingedickt wird.

4. Verfahren nach einem der Ansprüche 1 bis 3, dadurch gekennzeichnet, daß der mittels der Ablaufrinnen abgeleitete Feinstoff aus der oberen Lage der Faserstoffsuspension in den Deinkingbehälter zum erneuten Flotieren zurückgespeist wird.

5. Vorrichtung zur Durchführung des Verfahrens nach einem der Ansprüche 1 bis 4, wie Flotationszelle oder Deinkingturm und insbesondere Flotationswanne zum Reinigen einer Faserstoffsuspension von Verunreinigungen wie Druckfarben, Bindemitteln und Pigmenten, bestehend aus einem Behälter, dessen Bodenbereich zumindest teilweise mit Belüftungsaggregaten versehen und im Bereich des Flüssigkeitsspiegels der Faserstoffsuspension mit Mitteln zum Abführen der Verunreinigungen ausgerüstet ist, gekennzeichnet durch mindestens ein sich im wesentlichen quer über die gesamte Breite des Behälters dicht oberhalb des Flüssigkeitsspiegels (2) erstreckendes Abzugselement (4, 4') zur Abführung des mit Verunreinigungen beladenen Schaumes (3) und mindestens eine dicht unterhalb des Flüssigkeitsspiegels (2) sich im wesentlichen quer über die gesamte Breite des Behälters erstrekkende Ablaufrinne (5) zur Abführung der Feinstoffe aus dem an dem Flüssigkeitsspiegel (2) angrenzenden Bereich der Faserstoffsuspension.

6. Vorrichtung zum Deinken nach Anspruch 5, dadurch gekennzeichnet, daß die Abzugselemente (4) gelochte oder geschlitzte Rohre (4') sind, die unter einem Vakuum von 0,5-2 m/WS stehen.

7. Vorrichtung zum Deinken nach einem der Ansprüche 5 und 6, dadurch gekennzeichnet, daß die Abzugselemente (4) in einer Höhe von 10-50 mm über dem Flüssigkeitsspiegel (2) angeordnet sind.

8. Vorrichtung zum Deinken nach einem der Ansprüche 5 bis 7, dadurch gekennzeichnet, daß die Ablaufrinnen (5) als Profilrohre ausgebildet sind, die an ihrer Oberseite mit über ihrer Länge verteilt angeordneten Öffnungen (14) zur Abführung der Feinstoffe versehen sind.

9. Vorrichtung zum Deinken nach einem der Ansprüche 5 bis 8, daduch gekennzeichnet, daß die Ablaufrinnen (5) einen hakenförmigen Querschnitt aufweisen und die Öffnungen (14) im tiefsten Teil des Hakens angeordnet sind.

10. Vorrichtung zum Deinken nach einem der Ansprüche 5 bis 9, dadurch gekennzeichnet, daß die Öffnungen (14) Bohrungen sind, deren Entfernung voneinander zum Randbereich des Behälters hin abnimmt.

11. Vorrichtung zum Deinken nach einem der Ansprüche 5 bis 10, dadurch gekennzeichnet, daß die Ablaufrinne (5) mit dem Abzugselement (4) zu einem in seiner Höhe zum Flüssigkeitsspiegel (2) einstellbaren Verbundaggregat (27) zusammengefaßt ist.

12. Vorrichtung zum Deinken nach einem der Ansprüche 5 bis 11, dadurch gekennzeichnet, daß der Abstand des Abzugselementes (4) von der Ablaufrinne (5) einstellbar ist.

13. Vorrichtung zum Deinken nach einem der Ansprüche 5 bis 12, dadurch gekennzeichnet, daß die Ablaufrinne (5) eine freie Ablauföffnung (26) aufweist, deren Querschnittsfläche größer als die Summe der Querschnittsfläche der Öffnungen (14) ist.

14. Vorrichtung zum Deinken nach einem der Ansprüche 5 bis 13, dadurch gekennzeichnet, daß die Abzugselemente (4) mit einer Stauplatte (28) innerhabl des Verbundaggregates (27) verbunden sind.


## Claims

1. Process for de-inking a fibrous material suspension by flotation, in which the fibrous material suspension, after treatment with chemicals, is floated by supplying it with air and is freed from the floated impurities such as printing ink, binding agents and pigments, characterised in that the foam resulting from the flotation process is suctioned off just above the surface of the liquid and deposited and the upper layer of the fibrous material suspension is separated from the foam and the remaining fibrous material suspension and removed.

2. Process for de-inking fibrous material suspensions according to claim 1, characterized in that the air that results when the foam is suctioned off is used as air for the flotation process.

3. Process according to claims 1 and 2, characterized in that the foam suctioned off is centrifuged and thereby concentrated.

4. Process according to one of claims 1 to 3, characterized in that the refined material removed from the upper layer of the fibrous material suspension by means of outlet channels is fed back into the de-inking container to be subjected to the flotation process again.

5. Device for carrying out the process according to one of claims 1 to 4, such as a flotation cell or a de-inking tower and especially a flotation through for freeing a fibrous material suspension from impurities such as printing inks, binding agents and pigments, consisting of a container the base region of which is provided, over at least part of its area, with ventilation units and, in the region of the surface of the fibrous material suspension, is equipped with means for removing the impurities, characterized by at least one discharge element (4, 4') that extends, just above the surface (2) of the liquid, substantially transversely over the entire width of the container and that is used for removing the foam (3) containing the impurities and at least one outlet channel (5) that extends, just below the surface (2) of the liquid, substantially transversely over the entire width of the container and is used for removing the refined materials from the region of the fibrous material suspension that is adjacent to the surface (2) of the liquid.

6. De-inking device according to claim 5, characterized in that the discharge elements (4) are perforated or slotted tubes (4') that are under a vacuum of from 0.5 to 2 m/water gauge.

7. De-inking device according to one of claims 5 and 6, characterized in that the discharge elements (4) are arranged at from 10 to 50 mm above the surface (2) of the liquid.

8. De-inking device according to one of claims 5 to 7, characterized in that the outlet channels (5) are constructed as profile tubes the upper sides of which are provided with openings (14), distributed along their length, for removing the refined materials.

9. De-inking device according to one of claims 5 to 8, characterized in that the outlet channels (5) have a hook-shaped cross-section and the openings (14) are arranged in the deepest part of the hook.

10. De-inking device according to one of claims 5 to 9, characterized in that the openings (14) are bores, the spacing between which decreases towards the peripheral area of the container.

11. De-inking device according to one of claims 5 to 10, characterized in that the outlet channel (5) is combined with the discharge element (4) to form a composite unit (27) the level of which with respect to the surface (2) of the liquid can be adjusted.

12. De-inking device according to one of claims 5 to 11, characterized in that the distance between the discharge element (4) and the outlet channel (5) is adjustable.

13. De-inking device according to one of claims 5 to 12, characterized in that the outlet channel (5) has a free outlet opening (26) the cross-sectional area of which is greater than the sum of the cross-sectional areas of the openings (14).

14. De-inking device according to one of claims 5 to 13, characterized in that the discharge elements (4) are connected to a baffle plate (28) within the composite unit (27).

## Revendications

1. Procédé pour éliminer l'encre des suspensions de produits fibreux par flottation, au cours duquel les suspensions de produits fibreux sont mises à flotter par un apport d'air, après avoir été traitées avec des produits chimiques, et sont débarrassées des impuretés mises en suspension telles que couleurs d'impression, fixateurs et pigments, caractérisé par le fait que l'écume formée lors de la flottation est éliminée par aspiration juste au-dessus du niveau du liquide et est précipitée et que la couche supérieure de la suspension du produit fibreux, est séparée de l'écume et du reste de la suspension du produit fibreux et est évacuée.

2. Procédé pour éliminer l'encre des suspensions de produits fibreux, selon la revendication 1, caractérisé par le fait que l'air accumulé lors de l'aspiration de l'écume est utilisé en tant qu'air de soufflage pour la mise en flottation.

3. Procédé selon les revendications 1 et 2, caractérisé par le fait que l'écume aspirée est centrifugée et ainsi concentrée.

4. Procédé selon l'une des revendications 1 à 3, caractérisé par le fait que la matière fine provenant de la couche supérieure de la suspension du produit fibreux et évacuée à l'aide des gouttières d'écoulement est réintroduite dans le récipient d'élimination de l'encre en vue d'une nouvelle flottation.

5. Dispositif pour réaliser le procédé selon l'une des revendications 1 à 4, tel que petite cuve de flottation ou colonne d'élimination de l'encre et en particulier cuve de flottation, pour débarrasser une suspension de produit fibreux d'impuretés telles que couleurs d'impression, fixateurs et pigments, constitué par un récipient dont la zone inférieure est pourvue tout au moins en partie de dispositifs d'aération et qui possède, dans la zone du niveau du liquide de la suspension du produit fibreux, des moyens pour éliminer les impuretés, caractérisé par au moins un élément de dégagement (4, 4') s'étendant en particulier transversalement sur toute la largeur du récipient juste au-dessus du niveau (2) du liquide et servant à éliminer l'écume (3) chargée d'impuretés et par au moins une gouttière d'écoulement (5) s'étendant en particulier transversalement sur toute la largeur du récipient juste en dessous du niveau (2) du liquide et servant à éliminer les matières fines de la région de la suspension du produit fibreux avoisinant le niveau (2) du liquide.

6. Dispositif pour éliminer l'encre, selon la revendication 5, caractérisé par le fait que les éléments de dégagement (4) sont des tubes (4') à trous ou bien à fentes qui se trouvent sous un vide de 0,5-2 m d'eau.

7. Dispositif pour éliminer l'encre, selon l'une des revendications 5 et 6, caractérisé par le fait que les éléments de dégagement (4) sont disposés à une hauteur de 10-50 mm au-dessus du niveau (2) du liquide.

8. Dispositif pour éliminer l'encre, selon l'une des revendications 5 à 7, caractérisé par le fait que les gouttières d'écoulement (5) sont réalisées comme des tubes profilés qui présentent sur leur face supérieure des ouvertures (14) réparties sur toute leur longueur afin d'éliminer les matières fines.

9. Dispositif pour éliminer l'encre selon l'une des revendications 5 à 8, caractérisé par le fait que les gouttières d'écoulement (5) présentent une section transversale en forme de crochet et que les ouvertures (14) sont ménagées dans la partie la plus profonde du crochet.

10. Dispositif pour éliminer l'encre, selon l'une des revendications 5 à 9, caractérisé par le fait que les ouvertures (14) sont des trous dont l'éloignement les uns des autres diminue jusque vers la région du bord du récipient.

11. Dispositif pour éliminer l'encre, selon l'une des revendications 5 à 10, caractérisé par le fait que la gouttière d'écoulement (5) est groupée avec l'élément de dégagement (4) en un ensemble composite (27) réglable dans sa hauteur par rapport au niveau (2) du liquide.

12. Dispositif pour éliminer l'encre, selon l'une des revendications 5 à 11, caractérisé par le fait que la distance qui sépare l'élément de dégagement de la gouttière d'écoulement (5) est réglable.

13. Dispositif pour éliminer l'encre, selon l'une des revendications 5 à 12, caractérisé par le fait que la gouttière d'écoulement (5) comporte une ouverture libre (26) d'écoulement dont la surface de la section transversale est supérieure à la somme des surfaces des sections transversales des ouvertures (14).

14. Dispositif pour éliminer l'encre, selon l'une des revendications 5 à 13, caractérisé par le fait que les éléments de dégagement (4) sont reliés à une plaque de retenue (28) à l'intérieur de l'ensemble composite (27).

Fig.1

Fig.2

**0 014 448**

Fig.3

# Fig. 4

Fig.5